# EUROPÄISCHE PATENTSCHRIFT

(11) **EP 0 499 606 B1**
(45) Veröffentlichungstag und Bekanntmachung des Hinweises auf die Patenterteilung: **24.05.1995**
(21) Anmeldenummer: 90913376.1
(22) Anmeldetag: 13.09.1990
(51) Int. Cl.: H02B 13/035

(54) **DREIPOLIGE METALLGEKAPSELTE, DRUCKGASISOLIERTE HOCHSPANNUNGSSCHALTANLAGE**
THREE-POLE, METAL ENCASED, PRESSURISED-GAS-INSULATED HIGH-VOLTAGE SWITCHGEAR
APPAREILLAGE DE DISTRIBUTION HAUTE TENSION TRIPOLAIRE SOUS BLINDAGE METALLIQUE AVEC ISOLATION PAR GAZ COMPRIME

(30) Priorität: 02.11.1989 DE 3936759
(43) Veröffentlichungstag der Anmeldung: 26.08.1992
(73) Patentinhaber: SIEMENS AKTIENGESELLSCHAFT, 80333 München (DE)
(72) Erfinder: KELCH, Thomas, D-1000 Berlin 28 (DE); MEINHERZ, Manfred, D-1000 Berlin 28 (DE)
(86) Internationale Anmeldenummer: DE9000711
(87) Internationale Veröffentlichungsnummer: WO9106996

(56) Entgegenhaltungen:
- EP-A- 0 093 225
- FR-A- 2 089 315
- GB-A- 2 126 790

## Beschreibung

Die Erfindung bezieht sich auf eine dreipolige metallgekapselte, druckgasisolierte Hochspannungsschaltanlage mit einem einpolig gekapselten, durckgasisolierten Hochspannungsleistungsschalter mit mehreren nebeneinanderliegenden, in Druckgehäusen einpolig gekapselten Unterbrechereinheiten, die jeweils an einem mit dem Gehäuse des Antriebes und des Umlenkgetriebes verbundenen, tragenden Bauteil befestigt sind und deren Längsachsen parallel zueinander verlaufen.

Aus der FR 20 89 315 ist ein mehrpoliger, gekapselter Hochspannungsschalter mit mehreren, in einem gemeinsamen Gehäuse nebeneinanderliegenden Unterbrechereinheiten bekannt, bei dem auch das Umlenkgetriebe in demselben Gehäuse untergebracht ist, wie die Unterbrechereinheiten. Die Unterbrechereinheiten sind jeweils an ihren beiden Enden mit dem gemeinsamen Gehäuse verbunden, so daß für eine Wartung eine aufwendige Demontage notwendig ist.

Es ist bekannt, insbesondere aus der CH-PS-558 094, bei einer dreipoligen gekapselten, druckgasisolierten Hochspannungsschaltanlage die Pole des Leistungsschalters jeweils einpolig zu kapseln, so daß die Unterbrechereinheiten jedes Poles jeweils in einem separaten Druckgehäuse untergebracht sind, das stirnseitig durch einen Deckel verschlossen ist.

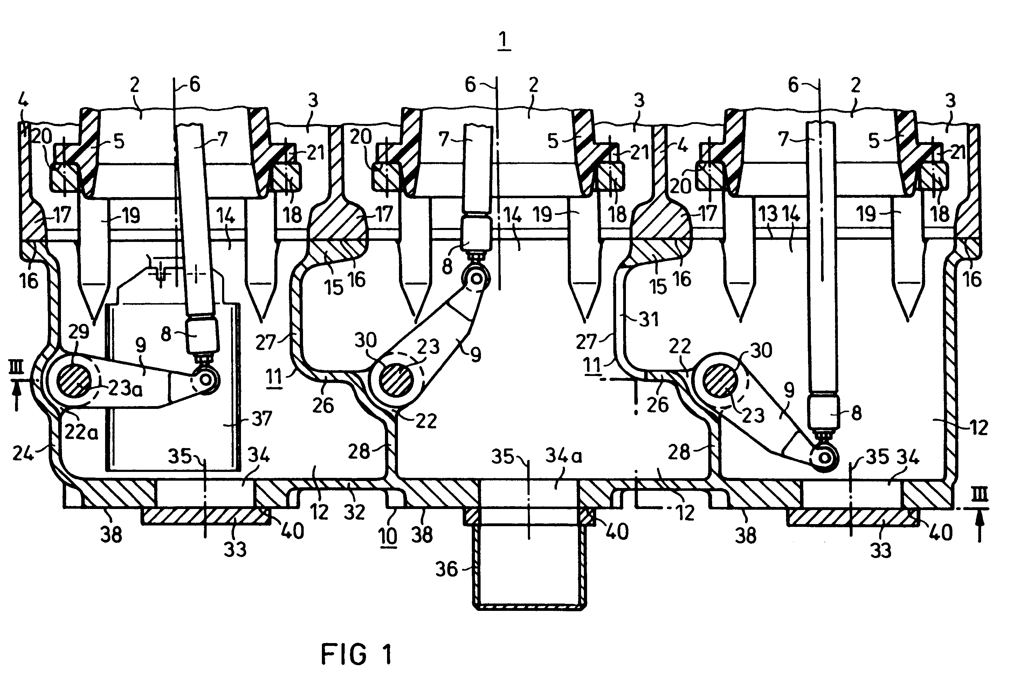

Aus der CH-PS-648 152 ist (vgl. dort insbesondere die Figuren 1 bis 4) eine mehrpolige metallgekapselte, druckgasisolierte Hochspannungsschaltanlage der eingangs genannten Art bekannt, bei der die Druckgehäuse der einzelnen Unterbrechereinheiten jeweils mit einem gemeinsamen Getriebegehäuse fest verbunden sind. Dort sind die Unterbrechereinheiten jede für sich in den einzelnen Druckgehäusen tragend befestigt.

Der Erfindung liegt die Aufgabe zugrunde, bei einer Hochspannungsschaltanlage der eingangs genannten Art eine mechanisch steifere Verbindung der Unterbrechereinheiten untereinander zu schaffen.

Zur Lösung dieser Aufgabe ist bei einer druckgasisolierten Hochspannungsschaltanlage der eingangs beschriebenen Art gemäß der Erfindung vorgesehen, daß die Unterbrechereinheiten an einem gemeinsamen, gegenüber den Druckgehäusen bedarfsweise bewegbaren, das Umlenkgetriebe des Antriebs enthaltenden Getriebegehäuse stirnseitig tragend befestigt sind, dessen Innenraum durch zwei Zwischenwände in drei jeweils einer Unterbrechereinheit zugeordnete Abschnitte unterteilt ist, daß die Druckgehäuse der einzelnen Unterbrechereinheiten über drei, jeweils eine Öffnung aufweisende Flansche gasdicht mit dem Getriebegehäuse verbunden sind, daß zur Befestigung der Unterbrechereinheiten am Getriebegehäuse Tragringe vorgesehen sind, die über die Öffnungen durchsetzende Stege mit dem Getriebegehäuse verbunden sind und daß in jedem Abschnitt Tragansätze für die Aufnahme der Lager einer Antriebswelle vorgesehen sind, die, jeweils senkrecht zur Längsachse der Unterbrechereinheit verlaufend und gegenüber dieser in jedem Abschnitt gleichsinnig seitlich versetzt angeordnet, über eine zweite Seitenwand des Getriebegehäuses nach außen geführt ist, wobei diese Tragansätze von den Zwischenwänden bzw. von einer Außenwand ausgehen.

Durch die tragende Befestigung der Unterbrechereinheiten an dem gemeinsamen Getriebegehäuse und dessen durch die Innenwände versteifte Ausführung ist gewährleistet, daß die Unterbrechereinheiten in ihrer Lage zueinander gut justierbar und zuverlässig festgelegt sind. Das Getriebegehäuse hat aufgrund seiner im wesentlichen quaderförmigen Gestalt die Form eines Hohlträgers, der schon für sich eine hohe mechanische Steifigkeit aufweist. Die Unterbrechereinheiten können mit dem Getriebegehäuse gemeinsam aus den Druckgehäusen zur Justage oder zu Wartungsarbeiten herausgezogen oder in diese eingeschoben werden. Dies ist beispielsweise auch bei der Erstmontage von Vorteil.

Der löschgasgefüllte Bereich einer jeden Unterbrechereinheit erstreckt sich bei dieser Konstruktion über das Druckgehäuse hinaus auf das Getriebegehäuse. Dadurch braucht an der Ankopplungsstelle zwischen den Druckgehäusen und dem Getriebegehäuse keine gasdichte Schiebedurchführung für den Antrieb der Unterbrechereinheit vorgesehen zu sein. Außerdem wird der jeder Unterbrechereinheit zugeordnete Abströmraum für das Löschgas durch diese Maßnahme vergrößert, so daß Druckerhöhungen beispielsweise infolge der Lichtbogeneinwirkung durch die Vergrößerung des Volumens gedämpft werden.

Weiterhin entfallen die bei getrennten Einzelgehäusen der Unterbrechereinheiten erforderlichen elektrischen Verbindungsleitungen zur Führung von Ausgleichsströmen, da das Getriebegehäuse selbst diese Ausgleichsströme führt und auch Ströme von den Druckgehäusen der Leistungsschalterpole übernehmen kann.

Die Außenwände des Getriebegehäuses bieten genügend Raum, um jeweils die bei einem Einzelantrieb der Unterbrechereinheiten der drei Pole des Leistungsschalters erforderlichen Abtriebsteile zu tragen. Man kann aber auch einen gemeinsamen Antrieb vorsehen, wobei dann ein einfaches Koppelgestänge die drei Antriebswellen verbinden kann, da deren Lagerung jeweils gleiche Toleranzen aufweist.

Es kann außerdem vorteilhaft vorgesehen sein, daß die Dichtflächen der Flansche in einer Ebene liegen.

Hierdurch ist gewährleistet, daß die Flansche in einer einzigen Einspannung spanend bearbeitet werden können. Eine weitere vorteilhafte Ausgestaltung der Erfindung sieht vor, daß die Abschnitte des Getriebegehäuses durch Ausgleichsöffnungen miteinander verbunden sind.

Eine solche Verbindung der Abschnitte des Innenraums des Getriebegehäuses untereinander führt zu einer effektiven Vergrößerung des jeder Unterbrechereinheit zur Verfügung stehenden Gasraums, was den Vorteil bringt, daß bei eventuellen Störlichtbögen der Druckanstieg des Isoliergases verringert bzw. abgedämpft wird. Zusätzliche Gasleitungen zwecks Verbindung unterschiedlicher Gasräume sind dabei nicht erforderlich.

Eine weitere vorteilhafte Ausgestaltung der Erfindung sieht vor, daß an der den Flanschen gegenüberliegenden Seitenwand des Getriebegehäuses durch Deckel verschließbare Montageöffnungen vorgesehen sind, deren Mittelachsen gegenüber den Längsachsen der Unterbrechereinheiten seitlich verschoben sind.

Dadurch ist auch nach dem Anbringen der Druckgehäuse und der Unterbrechereinheiten eine gute Zugänglichkeit des Innenraums des Getriebegehäuses gewährleistet, was z. B. die Befestigung der Teile des Umlenkgetriebes an der Schaltstange und deren Ausrichtung vereinfacht.

Es kann außerdem vorteilhaft vorgesehen sein, daß zumindest einer der Deckel der Montageöffnungen eine Brechplatte enthält.

Bei Verindung der Abschnitte des Innenraums des Getriebegehäuses untereinander kann durch Vorsehen einer einzigen Brechplatte eine genügende Sicherheit für den gesamten Gasraum erreicht werden.

Im folgenden sei die Erfindung noch anhand des in den Figuren 1 bis 5 dargestellten Ausführungsbeispiels näher erläutert, auf welches sich die Erfindung aber nicht beschränkt.

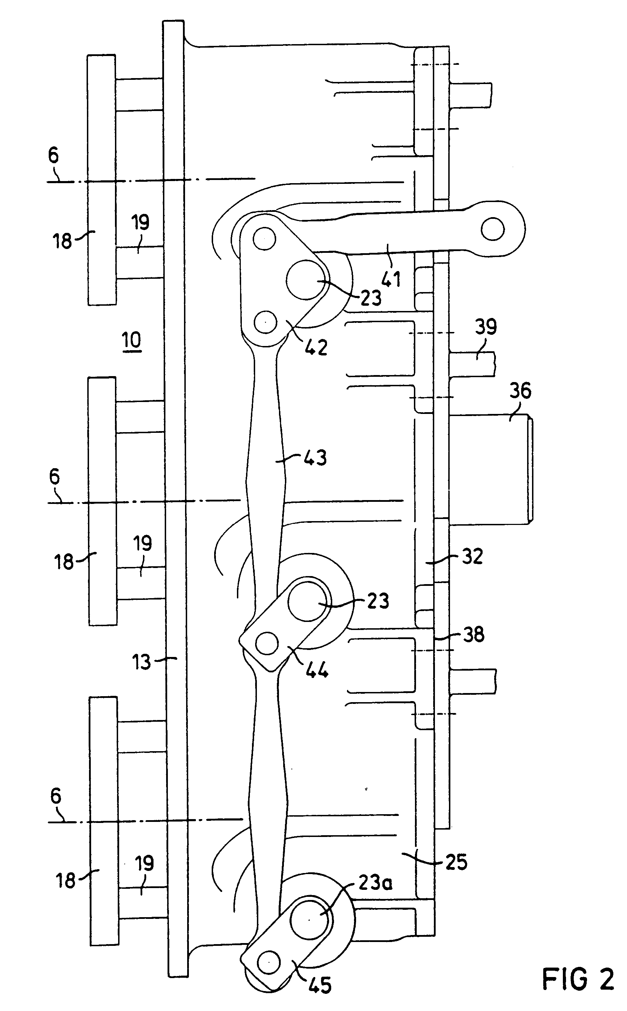

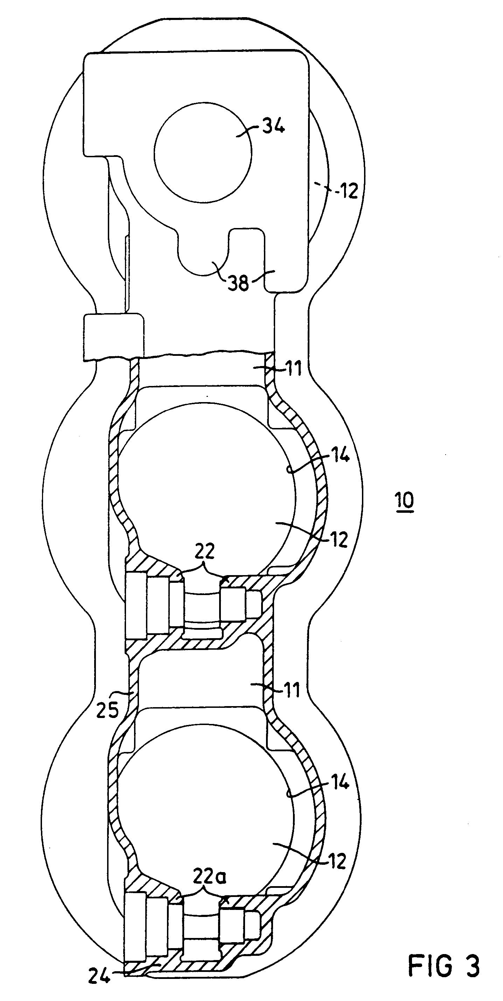

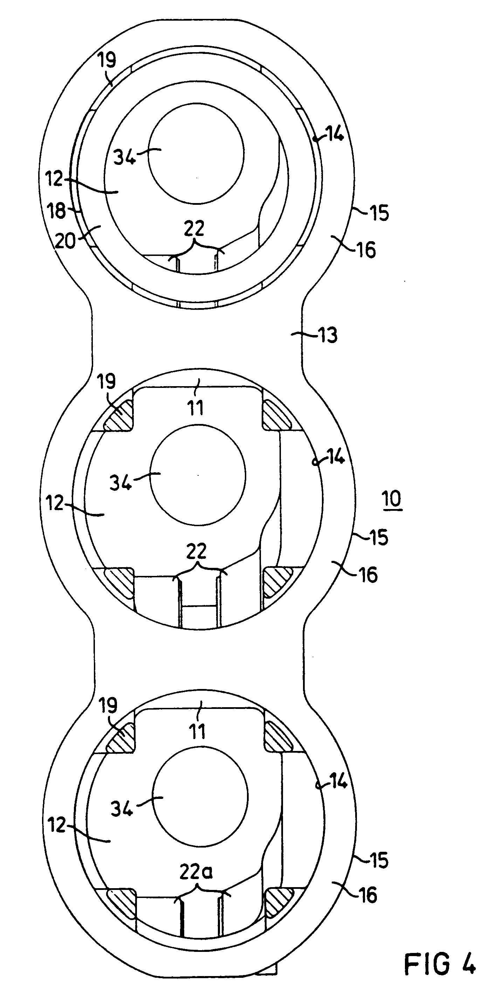

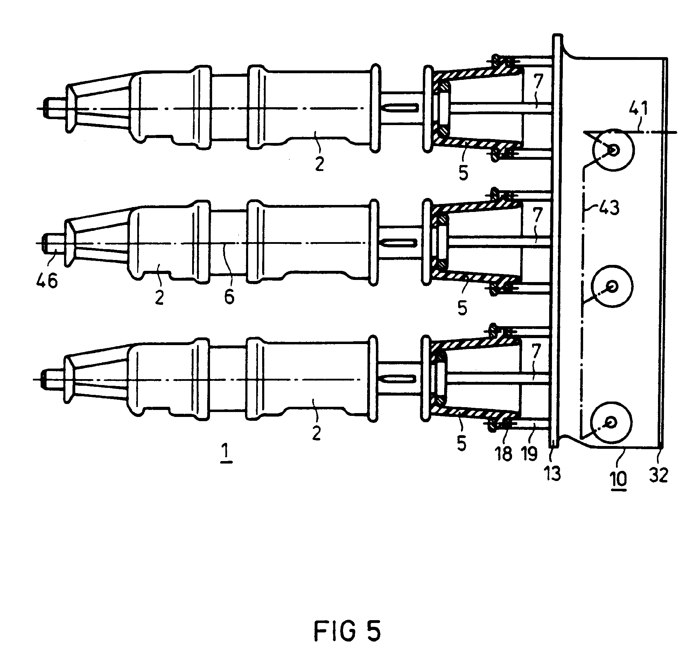

Figur 1 zeigt, schematisch dargestellt, einen Längsschnitt durch das Getriebegehäuse und durch einen Teil der mit ihm verbundenen anschließenden Druckgehäuse und Unterbrechereinheiten der Pole des Leistungsschalters, Figur 2 zeigt die entsprechende Draufsicht und in Figur 3 ist eine Draufsicht auf die äußere Seitenfläche nur des Getriebegehäuses allein ohne verbundene Teile dargestellt, die nebst einem teilweisen Schnitt längs der Schnittlinie III-III in Figur 1 geschnitten ist, desgleichen zeigt Figur 4 eine teilweise geschnittene Draufsicht auf die erste Seitenwand des Getriebegehäuses allein und in Figur 5 ist, in anderem Maßstab, schematisch eine teilweise geschnittene Ansicht des Getriebegehäuses und der mit ihm verbundenen Unterbrechereinheiten nebst Druckgehäusen dargestellt.

Eine dreipolige, metallgekapselte, mit Druckgas, insbesondere SF₆, isolierte Hochspannungsschaltanlage weist einen einpolig gekapselten, druckgasisolierten Hochspannungs-Leistungsschalter 1 auf, insbesondere einen Druckgasschalter. Die Unterbrechereinheiten 2 jedes Poles liegen jeweils in einem separaten Gasraum 3, der von Druckgehäusen 4 gebildet ist und werden von einem hohlen Stützisolator 5 getragen. Sie sind in ihren Druckgehäusen 4 mit jeweils parallel zueinander verlaufenden Längsachsen 6, die gestrichelt angedeutet sind, angeordnet.

Zur Betätigung der nicht dargestellten Schaltkontakte des Hochspannungs-Leistungsschalters 1 dienen zwei übereinander liegende Schaltstangen 7, die den hohlen Stützisolator 5 durchsetzen. Diese Schaltstangen 7 sind auf ihrem den Schaltkontakten abgewandten Ende 8 mit dem Gabelhebel des Umlenkgetriebes 9 verbunden, das in einem für alle drei Pole des Hochspannungs-Leistungsschalters 1 gemeinsamen Getriebegehäuse 10 untergebracht ist.

Das gemeinsame Getriebegehäuse 10 hat eine angenähert quaderförmige Gestalt, die einem Hohlträger ähnelt. Der Innenraum des Getriebegehäuses 10 ist durch zwei Zwischenwände 11 in drei jeweils einer Unterbrechereinheit 2 zugeordnete Abschnitte 12 unterteilt. Das Getriebegehäuse 10 weist infolgedessen eine hohe mechanische Steifigkeit auf. Es bildet das tragende Bauteil für die Unterbrechereinheiten 2 der drei Pole des Hochspannungs-Leistungsschalters 1 und dient auch zur Befestigung von deren Druckgehäusen 4. Dies ist unabhängig davon, ob diese Druckgehäuse 4 untereinander, ebenfalls sich versteifend, verbunden sind.

Auf der ersten Seitenwand 13 des Getriebegehäuses 10 sind drei Öffnungen 14 vorgesehen, die von Flanschen 15 umgeben sind, deren Dichtflächen 16 in einer Ebene liegen. An diese Dichtflächen 16 sind die stirnseitigen Flansche 17 der Druckgehäuse 4 gasdicht befestigt. Vor den Öffnungen 14 liegt weiterhin jeweils ein Tragring 18, der von Stegen 19 auf Abstand zu den Öffnungen 14 gehalten ist. Diese Stege 19 gehen von den Innenflächen der Wände des Getriebegehäuses 10 aus und durchsetzen die Öffnungen 14. Auf den Tragringen 18 befinden sich jeweils Anlageflächen 20, die ebenfalls in einer Ebene liegen, die sich parallel zu der Ebene der Dichtflächen 16 erstreckt. An diesen Anlageflächen 20 wird der Flansch 21 des hohlen Stützisolators 5 und somit die Unterbrechereinheiten 2 befestigt.

In jedem Abschnitt 12 des Getriebegehäuses 10 sind außerdem Tragansätze 22, 22a vorgesehen, die zur Lagerung der Antriebswellen 23, 23a für das Umlenkgetriebe 9 dienen. Diese Antriebswelle 23, 23a verläuft jeweils senkrecht zur Längsachse 6 der Unterbrechereinheit 2 und ist gegenüber dieser in jedem Abschnitt 12 gleichsinnig seitlich versetzt angeordnet. Infolgedessen gehen die Tragansätze 22 für zwei der drei Antriebswellen 23 von der Zwischenwand 11 aus, während der dritte Tragansatz 22a für die dritte Antriebswelle 23a von einer Außenwand 24 des Getriebegehäuses 10 ausgeht. Die Antriebswellen 23, 23a sind jeweils über eine zweite Seitenwand 25 des Getriebegehäuse 10 (Figur 3) nach außen geführt.

Die Zwischenwände 11 im Innern des Getriebegehäuses 10 weisen jeweils zwei gleichsinnig seitlich zur Längsachse 6 der Unterbrechereinheiten 2 verschobene, durch eine Stufe 26 verbundene, parallel verlaufende Bereiche 27, 28 auf. Der erste Bereich 27 mündet in die erste Seitenwand 13 ein und ist gegenüber dem zweiten Bereich 28 jeweils in Richtung auf die Außenwand 24 versetzt, die den Tragansatz 22a für das eine Lager 29 der Antriebswelle 23a aufweist. Die Tragansätze 22 für die beiden anderen Lager 30 der Antriebswelle 23 gehen jeweils von der Stufe 26 der Zwischenwand 11 aus.

Der erste Bereich 27 der Zwischenwand 11 ist soweit seitlich zum benachbarten Abschnitt 12 hin versetzt, daß er dort in den Bereich hinter der Öffnung 14 hineinragt. Auf diese Weise kann in diesem Bereich 27 der Zwischenwand 11 in einfachster Weise eine Öffnung 31 durch Fräsen hergestellt werden. Die Öffnung 31 verbindet jeweils die getrennten Abschnitte 12 des Innenraums des Getriebegehäuses 10 untereinander, so daß diese einen gemeinsamen Gasraum bilden. Damit die Öffnungen 31 möglichst großflächig sind, ist die Stufe 26 der Zwischenwand 11 mit den Tragansätzen 22 jeweils in Längsrichtung 6 der Unterbrechereinheiten 2 gesehen, außermittig in Richtung auf die vor der ersten Seitenwand 13 liegenden äußeren Seitenwand 32 des Getriebegehäuses 10 angeordnet.

In dieser äußeren Seitenwand 32 sind drei durch Deckel 33 verschließbare Montageöffnungen 34, 34a vorgesehen. Die Mittelachse 35 der Montageöffnungen 34, 34a ist gegenüber der Längsachse 6 der Unterbrechereinheiten 2 seitlich zum zweiten Bereich 28 der Zwischenwand 11 hin verschoben. Durch die Montageöffnungen 34, 34a ist das Ende 8 der Schaltstangen 7 leicht zugänglich, so daß der Gabelhebel des Umlenkgetriebes 9 in einfacher Weise an den Schaltstangen 7 befestigt und diese genau ausgerichtet werden können, auch wenn die Unterbrechereinheiten 2 bereits an dem Tragring 18 angeordnet sind.

Da das Innere des Getriebegehäuses 10 infolge der durch nachträgliche Bearbeitung der Zwischenwand 11 entstandenen Öffnungen 31 in der Zwischenwand 11 nur einen einzigen Gasraum bildet, ist es ausreichend, daß nur die mittlere Montageöffnung 34a mit einem Deckel 36 versehen ist, der eine Brechplatte enthält.

Weiterhin sind in allen drei Abschnitten 12 des Getriebegehäuses 10 Haltebleche 37 für Filtermaterial an der Innenfläche am Fuß eines Steges 19 befestigt.

Weiterhin sind auf der äußeren Seitenwand 32 in einer Ebene liegende Anschlußflächen 38 vorgesehen, an denen Antriebsgehäuse oder ein Tragkörper 39 für weitere Antriebskomponenten befestigt werden.

Die Anschlußflächen 38 auf der äußeren Seitenwand 32 und die Dichtflächen 40 für die Deckel 33, 36 der Montageöffnungen 34, 34a liegen jeweils in einer Ebene, sei es in der gleichen oder in parallelen Ebenen, die wiederum parallel zu den Ebenen der Dichtflächen 16 der Flansche 15 und somit auch parallel zu den Anschlußflächen 20 an den Tragringen 18 verlaufen. Dies ergibt eine wesentliche Erleichterung bei der Herstellung des gemeinsamen Getriebegehäuses 10, da alle diese Flächen in einer Einspannung des Getriebegehäuses 10 bearbeitet werden können. Damit weisen diese Flächen untereinander auch jeweils die gleiche Fertigungstoleranz auf.

Das gleiche gilt für die Aufnahmeflächen für die Lager 29, 30 der Antriebswellen 23, 23a an den Tragansätzen 22, 22a. Bei einem gemeinsamen Antrieb für alle drei Pole des Hochspannungs- Leistungsschalters 1, (siehe Figur 2), bei dem der nicht dargestellte Antrieb über eine Antriebsstange 41 zu einer mit einer Antriebswelle 23 verbundenen Kurbel 42 geführt ist, die ihrerseits über eine einfache Koppelstange 43 mit den Kurbeln 44 und 45 der beiden anderen Antriebswellen 23, 23a verbunden ist. Wegen der gleichen Fertigungstoleranz für die Lagerung aller drei Antriebswellen 23, 23a können besondere Einstell- und Anpaßmöglichkeiten der Koppelstange 43 entfallen.

Das gemeinsame Getriebegehäuse 10 für das Umlenkgetriebe 9 zur Betätigung der Schaltkontakte der Unterbrechereinheiten 2 des Hochspannungs-Leistungsschalters 1 bildet also ein mechanisch steifes tragendes Bauteil sowohl für die Unterbrechereinheiten 2 als auch für deren Druckgehäuse 4. Dabei sind die Flansche 17 der Druckgehäuse 4 an den Flanschen 15 des Getriebegehäuses 10 und die Unterbrechereinheiten 2 über den Flansch 21 des Stützisolators 5 an den Tragringen 18 befestigt, die ihrerseits von den Stegen 19 und durch das Getriebegehäuse 10 getragen werden. Die von diesen Befestigungen ausgehenden Beanspruchungen des Getriebegehäuses 10 werden somit von räumlich getrennten Bereichen des Getriebegehäuses 10 aufgenommen. Da die Anschlußleiter 46 der Unterbrechereinheiten 2, die jeweils zu den anderen Teilen der Hochspannungsschaltanlage führen, als Steckverbindung (siehe Figur 5) ausgeführt sind, können die noch am Getriebegehäuse 10 befestigten Unterbrechereinheiten 2 für Wartungszwecke gemeinsam mit dem Getriebegehäuse 10 verfahren werden. Dafür werden zunächst die Druckgehäuse 4 von den Flanschen 15 getrennt.

Außerdem bilden die Abschnitte 12 des Innenraums des Getriebegehäuses 10 jeweils zusätzliche Gasräume, deren Volumen sich zum Volumen der Gasräume 3 in den Druckgehäusen 4 addiert, so daß bei eventuellen Störlichtbogen der Druckanstieg in diesen Gasräumen 3 verringert ist.

Sind Öffnungen 31 in den Zwischenwänden 11 des Getriebegehäuses 10 vorgesehen, so wird dieser Puffereffekt noch weiterhin verstärkt, weil ein gemeinsamer Gasraum entsteht. Mithin werden durch dieses vorgesehene gemeinsame Getriebegehäuse 10 für die drei einpolig gekapselten Unterbrechereinheiten 2 des Hochspannungs-Leistungsschalters 1 nicht nur Vorteile in mechanischer und konstruktiver Hinsicht, sondern auch in elektrischer Hinsicht erzielt.

## Patentansprüche

1. Dreipolige metallgekapselte, druckgasisolierte Hochspannungsschaltanlage mit einem einpolig gekapselten, druckgasisolierten Hochspannungsleistungsschalter (1) mit mehreren nebeneinanderliegenden, in Druckgehäusen (4) einpolig gekapselten Unterbrechereinheiten (2), die jeweils an einem mit dem Gehäuse (10) des Antriebes und des Umlenkgetriebes (9) verbundenen, tragenden Bauteil befestigt sind und deren Längsachsen parallel zueinander verlaufen,
**dadurch gekennzeichnet**, daß die Unterbrechereinheiten (2) an einem gemeinsamen, gegenüber den Druckgehäusen (4) bedarfsweise bewegbaren, das Umlenkgetriebe (9) des Antriebs enthaltenden Getriebegehäuse (10) stirnseitig tragend befestigt sind, dessen Innenraum durch zwei Zwischenwände (11) in drei jeweils einer Unterbrechereinheit (2) zugeordnete Abschnitte (12) unterteilt ist, daß die Druckgehäuse (4) der einzelnen Unterbrechereinheiten (2) über drei, jeweils eine Öffnung (14) aufweisende Flansche (15) gasdicht mit dem Getriebegehäuse (10) verbunden sind, daß zur Befestigung der Unterbrechereinheiten (2) am Getriebegehäuse (10) Tragringe (18) vorgesehen sind, die über die Öffnungen (14) durchsetzende Stege (19) mit dem Getriebegehäuse (10) verbunden sind
und daß in jedem Abschnitt (12) Tragansätze (22, 22a) für die Aufnahme der Lager einer Antriebswelle (23, 23a) vorgesehen sind, die, jeweils senkrecht zur Längsachse (6) der Unterbrechereinheit (2) verlaufend und gegenüber dieser in jedem Abschnitt (12) gleichsinnig seitlich versetzt angeordnet, über eine zweite Seitenwand (25) des Getriebegehäuses (10) nach außen geführt ist, wobei diese Tragansätze (22, 22a) von den Zwischenwänden (11) bzw. von einer Außenwand (24) ausgehen.

2. Hochspannungsschaltanlage nach Anspruch 1,
**dadurch gekennzeichnet**, daß die Dichtflächen (16) der Flansche (15) in einer Ebene liegen.

3. Hochspannungsschaltanlage nach Anspruch 1 oder einem der folgenden,
**dadurch gekennzeichnet**, daß die Abschnitte (12) des Getriebegehäuses (10) durch Ausgleichsöffnungen (31) miteinander verbunden sind.

4. Hochspannungsschaltanlage nach Anspruch 1 oder einem der folgenden,
**dadurch gekennzeichnet**, daß an der
den Flanschen (15) gegenüberliegenden Seitenwand (32) des Getriebegehäuses (10) durch Deckel (33) verschließbare Montageöffnungen (34, 34a) vorgesehen sind, deren Mittelachsen (35) gegenüber den Längsachsen (6) der Unterbrechereinheiten (2) seitlich verschoben sind.

5. Hochspannungsschaltanlage nach Anspruch 4,
**dadurch gekennzeichnet**, daß zumindest einer der Deckel (36) der Montageöffnungen (34a) eine Brechplatte enthält.

## Claims

1. Three-pole, metal-encased, pressurized-gas-insulated high-voltage switchgear having a high-voltage circuit-breaker (1) encased on one pole and pressurized-gas-insulated, having several interrupter units (2) lying adjacent to one another and being encased on one pole in pressure housings (4), which units are in each case fastened to a supporting component connected to the housing (10) of the drive and the corner gears (9), and the longitudinal axes of which units extend parallel to one another,
characterized in that the interrupter units (2) are fastened on the front side in a supporting manner to a common gearbox (10) which can be moved if necessary relative to the pressure housings (4) and which contains the corner gears (9) of the drive, the interior of which gearbox is divided by two partitions (11) into three sections (12) associated in each case with an interrupter unit (2), in that the pressure housings (4) of the individual interrupter units (2) are connected in a gastight manner to the gearbox (10) by way of three flanges (15) in each case having an opening (14), in that supporting rings (18) are provided to fasten the interrupter units (2) to the gearbox (10), which supporting rings are connected to the gearbox (10) by way of bars (19) passing through the openings (14), and in that in each section (12) supporting attachments (22, 22a) are provided for the accommodation of the bearings of a drive shaft (23, 23a), which attachments, in each case extending perpendicular to the longitudinal axis (6) of the interrupter unit (2) and laterally staggered in the same direction relative to the interrupter unit in each section (12), are guided to the outside by way of a second side wall (25) of the gearbox (10), with these supporting attachments (22, 22a) issuing from the partitions (11) or from an outer wall (24).

2. High-voltage switchgear according to claim 1, characterized in that the sealing faces (16) of the flanges (15) lie in a plane.

3. High-voltage switchgear according to claim 1 or one of the following claims, characterized in that the sections (12) of the gearbox (10) are connected to one another by way of compensating openings (31).

4. High-voltage switchgear according to claim 1 or one of the following claims, characterized in that at the side wall (32) of the gearbox (10) lying opposite the flanges (15) assembly openings (34, 34a) which can be closed by covers (33) are provided, the centre axes (35) of which assembly openings are laterally displaced relative to the longitudinal axes (6) of the interrupter units (2).

5. High-voltage switchgear according to claim 4, characterized in that at least one of the covers (36) of the assembly openings (34a) contains a rupture diaphragm.

## Revendications

1. Installation tripolaire de coupure haute tension placée à blindage métallique et à isolation par un gaz sous pression et comportant un disjoncteur haute tension (1) à blindage de façon unipolaire et à isolation par un gaz sous pression et possédant plusieurs unités de sectionnement (2) disposées côte-à-côte et blindées de façon unipolaire dans des boîtiers résistant à la pression (4) et qui sont fixées respectivement à un élément porteur, relié au boîtier (10) du dispositif d'entraînement et de la transmission de renvoi (9) et dont les axes longitudinaux sont parallèles entre eux,
caractérisée par le fait que les unités de sectionnement (2) sont fixées, de manière à réaliser un support frontal, sur un boîtier commun de transmission (10), qui est déplaçable le cas échéant par rapport aux boîtiers sous pression (4) et contient la transmission de renvoi (9) du dispositif d'entraînement, et dont l'espace intérieur est divisé par deux parois intercalaires (11) en trois sections (12) associées chacune à une unité de sectionnement (2), que les boîtiers résistants à la pression (4) des différentes unités de sectionnement (2) sont reliés, d'une manière étanche aux gaz, au boîtier (10) de la transmission par l'intermédiaire de trois brides (15) comportant chacune une ouverture (14), que pour le fonctionnement des unités de sectionnement (2) sur le boîtier (10) de la transmission, il est prévu des bagues de support (18) qui sont reliées au boîtier (10) de la transmission par l'intermédiaire de barrettes (19) traversant les ouvertures (14), et
que dans chaque section (12) sont prévus des appendices saillants de support (22,22a) servant à loger les paliers d'un arbre d'entraînement (23,23a) qui est respectivement perpendiculaire à l'axe longitudinal (6) de l'unité de sectionnement (2) et est décalé latéralement dans le même sens par rapport à cette unité, dans chaque section (12), et ressort extérieurement à travers une seconde paroi latérale (25) du boîtier (10) de la transmission, ces appendices saillants de support (22,22a) ressortant des parois intercalaires (11) ou d'une paroi extérieure (24).

2. Installation de coupure haute tension suivant la revendication 1, caractérisée par le fait que les surfaces d'étanchéité (16) des brides (15) sont situées dans un plan.

3. Installation de coupure haute tension suivant la revendication 1 ou l'une des suivantes, caractérisée par le fait que les sections (12) du boîtier (10) de la transmission sont reliées entre elles par des ouvertures de compensation (31).

4. Installation de coupure haute tension suivant la revendication 1 ou l'une des suivantes, caractérisée par le fait que dans la paroi latérale (32), située à l'opposé des brides (15), du boîtier (10) de la transmission sont prévues des ouvertures de montage (34,34a), qui peuvent être fermées par un couvercle (43) et dont les axes médians (35) sont décalés latéralement par rapport aux axes longitudinaux (6) des unités de sectionnement (2).

5. Installation de coupure haute tension suivant la revendication 4, caractérisée par le fait qu'au moins l'un des couvercles (36) des ouvertures de montage (34a) contient une plaque de cisaillement.
